# EUROPÄISCHE PATENTSCHRIFT

(11) **EP 1 654 419 B1**
(45) Veröffentlichungstag und Bekanntmachung des Hinweises auf die Patenterteilung: **08.11.2006**
(21) Anmeldenummer: 04763464.7
(22) Anmeldetag: 23.07.2004
(51) Int. Cl.: D21H 17/45

(54) **WÄSSRIGE ZUSAMMENSETZUNG UND DEREN VERWENDUNG ZUR PAPIERHERSTELLUNG**
AQUEOUS COMPOSITION AND USE THEREOF FOR PAPER PRODUCTION
COMPOSITION AQUEUSE ET SON UTILISATION POUR LA PRODUCTION DE PAPIER

(30) Priorität: 25.07.2003 DE 10334133
(43) Veröffentlichungstag der Anmeldung: 10.05.2006
(73) Patentinhaber: BASF Aktiengesellschaft, 67056 Ludwigshafen (DE)
(72) Erfinder: HÄHNLE, Hans-Joachim, 67435 Neustadt (DE); ESSER, Anton, 67117 Limburgerhof (DE); BRAIG, Volker, 69469 Weinheim-Lützelsachsen (DE); BLUM, Rainer, 68307 Mannheim (DE); BAUMANN, Peter, 67459 Böhl-Iggelheim (DE); DUPUIS, Jacques, 68775 Ketsch (DE); NEUTZNER, Josef, 67434 Neustadt (DE)
(74) Vertreter: Wortmann, Jens
(86) Internationale Anmeldenummer: PCT/EP2004/008295
(87) Internationale Veröffentlichungsnummer: WO 2005/012637

(56) Entgegenhaltungen:
- EP-A- 0 374 646
- WO-A-00/59965
- WO-A-94/13882
- WO-A-97/42229
- PATENT ABSTRACTS OF JAPAN Bd. 1996, Nr. 07, 31. Juli 1996 (1996-07-31) & JP 8 059740 A (HYMO CORP), 5. März 1996 (1996-03-05) in der Anmeldung erwähnt

## Beschreibung

Die vorliegende Erfindung betrifft eine wässrige Zusammensetzung, umfassend wenigstens einen feinteiligen Füllstoff und wenigstens ein wasserlösliches amphoteres Copolymerisat, ein Verfahren zur Herstellung einer solchen Zusammensetzung und ihre Verwendung als Zusatz bei der Herstellung von Papier, Karton und Pappe.

Polymere mit einer grösseren Anzahl ionisch dissoziierbarer Gruppen in der Hauptkette und/oder einer Seitenkette werden als Polyelektrolyte bezeichnet. Weisen diese Polymere sowohl anionogene/anionische als auch kationogene/kationische Gruppen auf, so handelt es sich um amphotere Polyelektrolyte bzw. ampholytische Polymere. Sie sind im Allgemeinen wasserlöslich oder zumindest wasserdispergierbar und haben vielfältige Anwendung unter Anderem im Bereich der Papierherstellung gefunden.

Aus der EP-A-0 251 182 ist ein Verfahren zur Herstellung von Polymeren bekannt, wobei man eine Mischung von N-Vinylformamid und Acrylnitril oder Methacrylnitril in Gegenwart von Radikale bildenden Initiatoren polymerisiert und die Polymerisate anschließend durch Behandlung mit Säuren modifiziert. Die modifizierten Polymerisate sollen Vinylamineinheiten in Form von Salzen, Vinylformamid- und Acrylnitril- bzw- Methacrylnitrileinheiten sowie gegebenenfalls Acrylamid- und Acrylsäureeinheiten enthalten. Die Nacharbeitung von Beispielen dieser Veröffentlichung hat jedoch ergeben, daß die mit Säuren hydrolysierten Polymerisate beträchtliche Mengen an Amidineinheiten der Formel 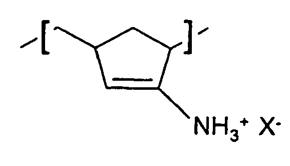 enthalten. Die hydrolysierten Polymerisate werden bei der Herstellung von Papier als Entwässerungsmittel, Retentionsmittel und zur Verfestigung des Papiers verwendet.

Aus der EP-A-0 528 409 sind kationische Copolymerisate bekannt, die 20 bis 90 Mol-% Amidineinheiten enthalten. Sie werden durch Copolymerisation von N-Vinylformamid und Acrylnitril and anschließende Hydrolyse der Copolymerisate mit Säuren hergestellt. Die Amidineinheiten enthaltenden Polymeren werden als Flockungsmittel für Schlämme verwendet.

Gegenstand der WO 94/13882 ist die Verwendung von Copolymerisaten, die durch Copolymerisation von N-Vinylcarbonsäureamiden, monoethylenisch ungesättigten Carbonsäuren und gegebenenfalls Vinylacetat, N-Vinylpyrrolidon und/oder N-Vinylimidazol und gegebenenfalls Monomeren mit mindestens zwei Doppelbindungen im Molekül und anschließende teilweise oder vollständige Hydrolyse der in den Copolymerisaten enthaltenen Vinylcarbonsäureamideinheiten zu Amin- bzw. Ammoniumgruppen erhältlich sind, bei der Papierherstellung als Zusatz zum Papierstoff zur Erhöhung der Entwässerungsgeschwindigkeit und der Retention sowie der Trocken- und Nassfestigkeit des Papiers. Wie Analysen ergeben haben, können hydrolysierte Copolymerisate aus N-Vinylformamid und Acrylsäure beträchtliche Mengen an Amidineinheiten der folgenden Formel enthalten 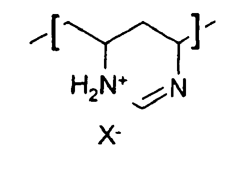 in der X⁻ ein Anion bedeutet.

Aus der JP-A-08059740 ist bekannt, daß man zu wässrigen Suspensionen von anorganischen Teilchen amphotere wasserlösliche Polymeren zusetzt, wobei zumindest ein Teil der Polymere auf der Füllstoffoberfläche adsorbiert wird. Die amphoteren Polymeren werden vorzugsweise durch Hydrolysieren von Copolymerisaten aus N-Vinylformamid, Acrylnitril und Acrylsäure in Gegenwart von Säuren hergestellt. Sie enthalten 20 bis 90 Mol-% Amidineinheiten der Struktur 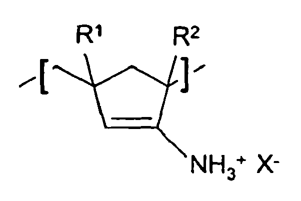 in der R¹ und R² jeweils H oder eine Methylgruppe und X⁻ ein Anion bedeuten. Die mit solchen Polymeren behandelten Füllstoffslurries werden bei der Herstellung von füllstoffhaltigen Papieren dem Papierstoff zugesetzt. Die Füllstoffbehandlung soll zu einer verbesserten Entwässerung des Papierstoffs führen und eine Verbesserung verschiedener Festigkeitseigenschaften des getrockneten Papiers sowie eine Verbesserung der Füllstoffretention bewirken.

In der US-A-2002/0088579 wird die Vorbehandlung von anorganischen Füllstoffen mit kationischen, anionischen und amphoteren (zwitterionischen) Polymeren beschrieben. Die Behandlung besteht dabei in jedem Fall aus mindestens zwei Stufen. Empfohlen wird zuerst die Behandlung mit einem kationischen Polymer und anschließend die Behandlung mit einem anionischen Polymer. In weiteren Schritten können alternierend wieder weitere kationische und anionische Polymere adsorbiert werden. Die wässrigen Suspensionen mit den vorbehandelten Füllstoffteilchen werden bei der Herstellung von füllstoffhaltigem Papier dem Papierstoff zugesetzt. Die Füllstoffbehandlung soll zu einer Verbesserung verschiedener Festigkeitseigenschaften des getrockneten Papiers führen.

Die WO 00/59965 beschreibt eine Polymerzusammensetzung auf Basis von Polymeren mit Phosphonat- und Sulfonatgruppen und deren Verwendung bei der Papierherstellung. Die Polymere können zusätzlich Monomere mit Amidgruppen einpolymerisiert enthalten. Der Einsatz von Copolymeren, die N-Vinylcarbonsäureamide einpolymerisiert enthalten und nach der Polymerisation einer Hydrolyse unterzogen werden, ist nicht offenbart. Auch die Verwendung von wässrigen Anschlämmungen von feinteiligen Füllstoffen, die zumindest teilweise mit solchen Polymerisaten überzogen sind, zur Papierherstellung ist nicht beschrieben.

Die unveröffentlichte deutsche Patentanmeldung P 103 22 266.9 beschreibt wässrige Anschlämmungen von feinteiligen Füllstoffen, die zumindest teilweise mit Polymerisaten überzogen sind und die erhältlich sind durch Behandeln von wässrigen Anschlämmungen feinteiliger Füllstoffe mit mindestens einem wasserlöslichen amphoteren Copolymerisat, das erhältlich ist durch Copolymerisieren von
a) mindestens einem N-Vinylcarbonsäureamid der Formel 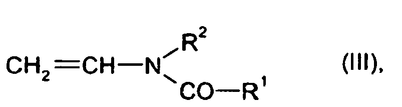 in der R¹, R² = H oder C₁- bis C₆-Alkyl bedeuten,
b) mindestens einer monoethylenisch ungesättigten Carbonsäure mit 3 bis 8 C-Atomen im Molekül und/oder deren Alkalimetall-, Erdalkalimetall- oder Ammoniumsalzen und gegebenenfalls
c) anderen monoethylenisch ungesättigten Monomeren, die frei von Nitrilgruppen sind, und gegebenenfalls
d) Verbindungen, die mindestens zwei ethylenisch ungesättigte Doppelbindungen im Molekül aufweisen,
und anschließende teilweise oder vollständige Abspaltung der Gruppen -CO-R¹ aus den in das Copolymerisat einpolymerisierten Monomeren III erhältlich sind.

Der Erfindung liegt die Aufgabe zugrunde, eine wässrige Zusammensetzung, umfassend wenigstens einen feinteiligen Füllstoff und wenigstens ein wasserlösliches amphoteres Copolymerisat zur Verfügung zu stellen, die bei der Papierherstellung einsetzbar ist. Damit hergestellte Papierprodukte sollen sich durch gute anwendungstechnische Eigenschaften, speziell guten Festigkeitseigenschaften des getrockneten Papiers auszeichnen. Dazu zählen speziell gute Trockenreißlängen, Trockenrupffestigkeiten und/oder gute Werte hinsichtlich der inneren Festigkeit.

Überraschenderweise wurde nun gefunden, das diese Aufgabe durch eine wässrige Zusammensetzung gelöst wird, die wenigstens einen feinteiligen Füllstoff und wenigstens ein wasserlösliches amphoteres Copolymerisat umfasst, wobei das Copolymerisat wenigstens ein Monomer einpolymerisiert enthält, das ausgewählt ist unter unter monoethylenisch ungesättigten Sulfonsäuren, Phosphonsäuren, Phosphorsäureestern und Derivaten davon.

Gegenstand der Erfindung ist daher eine wässrige Zusammensetzung, umfassend wenigstens einen feinteiligen Füllstoff und wenigstens ein wasserlösliches amphoteres Copolymerisat, das erhältlich ist durch Copolymerisieren eines Monomergemischs, enthaltend
a) wenigstens ein N-Vinylcarbonsäureamid der allgemeinen Formel I 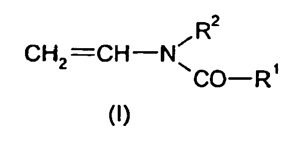 worin R¹ und R² unabhängig voneinander für H oder C₁- bis C₆-Alkyl stehen,
b) wenigstens ein Monomer, das ausgewählt ist unter monoethylenisch ungesättigten Sulfonsäuren, Phosphonsäuren, Phosphorsäureestern und Derivaten davon,
c) gegebenenfalls wenigstens ein Monomer, das ausgewählt ist unter monoethylenisch ungesättigten Mono- und Dicarbonsäuren, deren Salzen und Dicarbonsäureanhydriden,
d) gegebenenfalls wenigstens ein von den Komponenten a) bis c) verschiedenes monoethylenisch ungesättigtes Monomer, das frei von Nitrilgruppen ist, und
e) gegebenenfalls wenigstens eine Verbindung, die mindestens zwei ethylenisch ungesättigte Doppelbindungen im Molekül aufweist,
mit der Maßgabe, dass das Monomergemisch wenigstens ein Monomer b) oder c) mit mindestens einer freien Säuregruppe und/oder einer Säuregruppe in Salzform enthält,
und anschließende teilweise oder vollständige Hydrolyse der Gruppen -CO-R¹ aus den in das Copolymerisat einpolymerisierten Monomeren I.

Im Rahmen der vorliegenden Erfindung umfasst der Ausdruck Alkyl geradkettige und verzweigte Alkylgruppen. Geeignete Alkylgruppen sind z. B. C₁-C₆-Alkyl- und besonders bevorzugt C₁-C₄-Alkylgruppen. Dazu zählen insbesondere Methyl, Ethyl, Propyl, Isopropyl, n-Butyl, 2-Butyl, sec.-Butyl, tert.-Butyl, n-Pentyl, 2-Pentyl, 2-Methylbutyl, 3-Methylbutyl, 1,2-Dimethylpropyl, 1,1-Dimethylpropyl, 2,2-Dimethylpropyl, 1-Ethylpropyl, n-Hexyl, 2-Hexyl, 2-Methylpentyl, 3-Methylpentyl, 4-Methylpentyl, 1,2-Dimethylbutyl, 1,3-Dimethylbutyl, 2,3-Dimethylbutyl, 1,1-Dimethylbutyl, 2,2-Dimethylbutyl, 3,3-Dimethylbutyl, 1,1,2-Trimethylpropyl, 1,2,2-Trimethylpropyl, 1-Ethylbutyl, 2-Ethylbutyl, 1-Ethyl- 2-methylpropyl, etc.

Im Folgenden werden Verbindungen, die sich von Acrylsäure und Methacrylsäure ableiten können teilweise verkürzt durch Einfügen der Silbe "(meth)" in die von der Acrylsäure abgeleitete Verbindung bezeichnet.

Als Monomere a) geeignete offenkettige N-Vinylamidverbindungen der Formel I) sind beispielsweise N-Vinylformamid, N-Vinyl-N-methylformamid, N-Vinylacetamid, N-Vinyl-N-methylacetamid, N-Vinyl-N-ethylacetamid, N-Vinylpropionamid, N-Vinyl-N-methylpropionamid und N-Vinylbutyramid und Mischungen davon.

Geeignete Monomere b) sind Verbindungen, die einen organischen Rest mit einer polymerisierbaren, α,β-ethylenisch ungesättigten Doppelbindung und einer Sulfonsäure- oder Phosphonsäuregruppe pro Molekül aufweisen. Geeignet sind weiterhin die Salze und Ester der zuvor genannten Verbindungen. Bei den Estern der Phosphonsäuren kann es sich dabei um die Mono- oder die Diester handeln. Geeignete Monomere b) sind weiterhin Monoester der Phosphorsäure mit Alkoholen mit einer polymerisierbaren, α,β-ethylenisch ungesättigten Doppelbindung. Dabei kann eines oder können die beiden übrigen Protonen der Phosphorsäuregruppe durch geeignete Basen neutralisiert oder mit Alkoholen, die keine polymerisierbaren, Doppelbindungen aufweisen, verestert werden.

Geeignete Basen zur teilweisen oder vollständigen Neutralisation der Säuregruppen der Monomere b) sind beispielsweise Alkalimetall- oder Erdalkalimetallbasen, Ammoniak, Amine und/oder Alkanolamine. Beispiele hierfür sind Natronlauge, Kalilauge, Natriumcarbonat, Kaliumcarbonat, Natriumhydrogencarbonat, Kaliumhydrogencarbonat, Magnesiumoxid, Calciumhydroxid, Calciumoxid, Triethanolamin, Ethanolamin, Morpholin, Diethylentriamin oder Tetraethylenpentamin. Geeignete Alkohole zur Herstellung der Ester sind beispielsweise C₁-C₆-Alkanole, wie Methanol, Ethanol, n-Propanol, Isopropanol, n-Butanol, sec.-Butanol, tert.-Butanol, etc.

Zu den Monomeren b) zählen beispielsweise Vinylsulfonsäure, Allylsulfonsäure, Methallylsulfonsäure, Sulfoethylacrylat, Sulfoethylmethacrylat, Sulfopropylacrylat, Sulfopropylmethacrylat, 2-Hydroxy-3-acryloxypropylsulfonsäure 2-Hydroxy-3-methacryloxypropylsulfonsäure, Styrolsulfonsäure, Acrylamidomethylenphosphonsäure, 2-Acrylamido-2-methylpropansulfonsäure, Vinylphosphonsäure, CH₂=CH-NH-CH₂-PO₃H, Vinylphosphonsäuremonomethylester, Vinylphosphonsäuredimethylester, Allylphosphonsäure, Allylphosphonsäuremonomethylester, Allylphosphonsäuredimethylester, Acryamidomethylpropylphosphonsäure (Meth)acrylethylenglycolphosphat, Phosphorsäuremonovinylester, Phosphorsäuremonoallylester etc.

Werden als Komponente b) ausschließlich Monomere eingesetzt, bei denen alle Protonen der Säuregruppen verestert sind, wie z.B. Vinylphosphonsäuredimethylester oder Allylphosphonsäuredimethylester, so wird zur Polymerisation wenigstens eine monoethylenisch ungesättigte Mono- und/oder Dicarbonsäure oder ein Salz davon eingesetzt, wie sie im folgenden als Komponente c) beschrieben werden. Somit ist sichergestellt, das die erfindungsgemäss eingesetzten Copolymere anionogene/anionische Gruppen aufweisen. Alternativ dazu können auch die Bedingungen für die Hydrolyse der Amidgruppen so gewählt werden, dass auch die Estergruppen teilweise gespalten werden.

Die zuvor genannten Monomere b) können einzeln oder in Form von beliebigen Mischungen eingesetzt werden.

Geeignete Monomere c) sind monoethylenisch ungesättigte Carbonsäuren mit 3 bis 8 C-Atomen, die wasserlöslichen Salze dieser Carbonsäuren sowie monoethylenisch ungesättigte Carbonsäureanhydride. Dazu zählen beispielsweise Acrylsäure, Methacrylsäure, Dimethacrylsäure, Ethacrylsäure, α-Chloracrylsäure, Crotonsäure, Maleinsäure, Maleinsäureanhydrid, Fumarsäure, Itaconsäure, Mesaconsäure, Citraconsäure, Glutaconsäure, Aconitsäure, Methylenmalonsäure, Allylessigsäure und Vinylessigsäure. Die Monomeren dieser Gruppe können allein oder in Mischung miteinander, in teilweise oder in vollständig neutralisierter Form bei der Copolymerisation eingesetzt werden. Zur Neutralisation geeignete Basen sind die bei der Komponente b) genannten.

Die Copolymerisate können zur Modifizierung gegebenenfalls wenigstens ein weiteres Monomer d) einpolymerisiert enthalten, das frei von Nitrilgruppen ist. Vorzugsweise sind diese zusätzlichen Monomere d) ausgewählt unter Estern α,β-ethylenisch ungesättigter Mono- und Dicarbonsäuren mit C₁-C₃₀-Alkanolen, C₂-C₃₀-Alkandiolen und C₂₋C₃₀-Aminoalkoholen, Amiden α,β-ethylenisch ungesättigter Monocarbonsäuren und deren N-Alkyl- und N,N-Dialkylderivaten, Estern von Vinylalkohol und Allylalkohol mit C₁-C₃₀-Monocarbonsäuren, N-Vinyllactamen, stickstoffhaltigen Heterocyclen mit α,β-ethylenisch ungesättigten Doppelbindungen, Vinylaromaten, Vinylhalogeniden, Vinylidenhalogeniden, C₂-C₈-Monootefinen und Mischungen davon.

Geeignete zusätzliche Monomere sind d) sind z.B. Methyl(meth)acrylat, Methylethacrylat, Ethyl(meth)acrylat, Ethylethacrylat, n-Butyl(meth)acrylat, Isobutyl(meth)acrylat, tert.-Butyl(meth)acrylat, tert.-Butylethacrylat, n-Octyl(meth)acrylat, 1,1,3,3-Tetramethylbutyl(meth)acrylat, Ethylhexyl(meth)acrylat und Mischungen davon.

Geeignete zusätzliche Monomere d) sind weiterhin die Ester von α,β-ethylenisch ungesättigten Mono- und Dicarbonsäuren mit Aminoalkoholen, vorzugsweise C₂-C₁₂₋Aminoalkoholen. Diese können am Aminstickstoff C₁-C₈-monoalkyliert oder -dialkyliert sein. Als Säurekomponente dieser Ester eignen sich z.B. Acrylsäure, Methacrylsäure, Fumarsäure, Maleinsäure, Itaconsäure, Crotonsäure, Maleinsäureanhydrid, Monobutylmaleat und Gemische davon. Bevorzugt werden Acrylsäure, Methacrylsäure und deren Gemische eingesetzt. Dazu zählen N-Methylaminomethyl(meth)acrylat, N-Methylaminoethyl(meth)acrylat, N,N-Dimethylaminomethyl(meth)acrylat, N,N-Dimethylaminoethyl(meth)acrylat, N,N-Diethylaminoethyl(meth)acrylat, N,N-Dimethylaminopropyl(meth)acrylat, N,N-Diethylaminopropyl(meth)acrylat, N,N-Dimethylaminocyclohexyl(meth)acrylat etc.

Geeignete zusätzliche Monomere d) sind weiterhin Acrylsäureamid, Methacrylsäureamid, N-Methyl(meth)acrylamid, N-Ethyl(meth)acrylamid, N-Propyl(meth)acrylamid, N-(n-Butyl)(meth)acrylamid, tert.-Butyl(meth)acrylamid, n-Octyl(meth)acrylamid, 1,1,3,3-Tetramethylbutyl(meth)acrylamid, Ethylhexyl(meth)acrylamid und Mischungen davon.

Geeignete zusätzliche Monomere d) sind weiterhin 2-Hydroxyethylacrylat, 2-Hydroxyethylmethacrylat, 2-Hydroxyethylethacrylat, 2-Hydroxypropylacrylat, 2-Hydroxypropylmethacrylat, 3-Hydroxypropylacrylat, 3-Hydroxypropylmethacrylat, 3-Hydroxybutylacrylat, 3-Hydroxybutylmethacrylat, 4-Hydroxybutylacrylat, 4-Hydroxybutylmethacrylat, 6-Hydroxyhexylacrylat, 6-Hydroxyhexylmethacrylat etc.

Geeignete zusätzliche Monomere sind weiterhin N-[2-(dimethylamino)ethyl]acrylamid, N-[2-(dimethylamino)ethyl]methacrylamid, N-[3-(dimethylamino)propyl]acrylamid, N-[3-(dimethylamino)propyl]methacrylamid, N-[4-(dimethylamino)butyl]acrylamid, N-[4-(dimethylamino)- butyl]methacrylamid, N-[2-(diethylamino)ethyl]acrylamid, etc.

Geeignete Monomere d) sind weiterhin N-Vinyllactame und deren Derivate, die z.B. einen oder mehrere C₁-C₆-Alkylsubstituenten, wie Methyl, Ethyl, n-Propyl, lsopropyl, n-Butyl, sec.-Butyl, tert.-Butyl etc. aufweisen können. Dazu zählen z.B. N-Vinylpyrrolidon, N-Vinylpiperidon, N-Vinylcaprolactam, N-Vinyl-5-methyl-2-pyrrolidon, N-Vinyl-5-ethyl-2-pyrrolidon, N-Vinyl-6-methyl-2-piperidon, N-Vinyl-6-ethyl-2-piperidon, N-Vinyl-7-methyl-2-caprolactam, N-Vinyl-7-ethyl-2-caprolactam etc.

Geeignete Monomere d) sind weiterhin N-Vinylimidazole, Alkylvinylimidazole, insbesondere Methylvinylimidazole wie 1-Vinyl-2-methylimidazol, 3-Vinylimidazol-N-oxid, 2-und 4-Vinylpyridine, 2- und 4-Vinylpyridin-N-oxide sowie betainische Derivate und Quaternisierungsprodukte dieser Monomere.

Geeignete zusätzliche Monomere sind weiterhin Ethylen, Propylen, Isobutylen, Butadien, Styrol, α-Methylstyrol, Vinylchlorid, Vinylidenchlorid, Vinylfluorid, Vinylidenfluorid und Mischungen davon.

Die zuvor genannten zusätzlichen Monomere d) können einzeln oder in Form von beliebigen Mischungen eingesetzt werden.

Eine weitere Modifizierung der Copolymerisate ist dadurch möglich, dass man bei der Copolymerisation Monomere e) einsetzt, die mindestens zwei Doppelbindungen im Molekül enthalten, z.B. Methlenbisacrylamid, Glykoldiacrylat, Glykoldimethacrylat, Gylcerintriacrylat, Pentaerythrittriallylether, mindestens zweifach mit Acrylsäure und/oder Methacrylsäure veresterte Polyalkylenglykole oder Polyole wie Pentaerythrit, Sobit oder Glukose. Falls mindestens ein Monomer der Gruppe (d) bei der Copolymerisation eingesetzt wird, so betragen die angewendeten Mengen bis zu 2 Mol-%, z.B. 0,001 bis 1 Mol-%.

In einer bevorzugten Ausführungsform wird zur Polymerisation ein Monomergemisch eingesetzt, wobei die Komponente b) nur aus monoethylenisch ungesättigten Sulfonsäuren und/oder Derivaten davon oder wobei die Komponente b) nur monoethylenisch ungesättigten Phosphonsäuren, Phosphorsäureestern und/oder Derivaten davon besteht.

Bevorzugt enthält das zur Polymerisation eingesetzte Monomergemisch eine Kombination aus wenigstens einer Verbindung der Komponente b) und wenigstens einer Verbindung der Komponente c), jeweils mit einer freien Säuregruppe oder einer Säuregruppe in Salzform. Eine bevorzugte Kombination ist beispielsweise Vinylsulfonsäure oder ein Alkalivinylsulfonat und Acrylsäure. Eine weitere bevorzugte Kombination ist beispielsweise Vinylphosphonsäure oder ein Alkalivinylphosphonat und Acrylsäure.

Die erfindungsgemäß eingesetzten wasserlöslichen amphoteren Copolymerisate sind vorzugsweise erhältlich durch radikalische Copolymerisation von
- 1 bis 99 Gew.-%, bevorzugt 5 bis 95 Gew.-%, insbesondere 20 bis 90 Gew.-%, bezogen auf das Gesamtgewicht der zur Polymerisation eingesetzten Monomere, wenigstens einer Verbindung der Komponente a),
- 1 bis 99 Gew.%, bevorzugt 5 bis 95 Gew.%, insbesondere 10 bis 80 Gew.-%, bezogen auf das Gesamtgewicht der zur Polymerisation eingesetzten Monomere, wenigstens einer Verbindung der Komponente b),
- 0 bis 80 Gew.%, bevorzugt 0,1 bis 50 Gew.%, insbesondere 1 bis 40 Gew.-%, bezogen auf das Gesamtgewicht der zur Polymerisation eingesetzten Monomere, wenigstens einer Verbindung der Komponente c),
- 0 bis 30 Gew.-%, bevorzugt 0,1 bis 25 Gew.-%, insbesondere 1 bis 15 Gew.-%, bezogen auf das Gesamtgewicht der zur Polymerisation eingesetzten Monomere, wenigstens einer Verbindung der Komponente d),
- 0,0001 bis 5 Gew.-%, bevorzugt 0,001 bis 3 Gew.-%. bezogen auf das Gesamtgewicht der zur Polymerisation eingesetzten Monomere, wenigstens einer Verbindung der Komponente e),
und anschließender teilweiser oder vollständiger Hydrolyse der in das Copolymerisat einpolymerisierten Monomeren a).

Die Herstellung der wasserlöslichen amphoteren Polymere erfolgt nach üblichen, dem Fachmann bekannten Verfahren. Geeignete Verfahren sind z.B. in der EP-A-0 251 182 und der WO 94/13882 beschrieben, worauf hier Bezug genommen wird.

Die Herstellung der wasserlöslichen amphoteren Polymere kann durch Lösungs-, Fällungs-, Suspensions- oder Emulsionspolymerisation erfolgen. Bevorzugt ist die Lösungspolymerisation in wässrigen Medien erhalten. Geeignete wässrige Medien sind Wasser und Gemische aus Wasser und mindestens einem wassermischbaren Lösungsmittel, z. B. einem Alkohol, wie Methanol, Ethanol, n-Propanol, etc.

Die Polymerisationstemperaturen liegen vorzugsweise in einem Bereich von etwa 30 bis 200 °C, besonders bevorzugt 40 bis 110 °C. Die Polymerisation erfolgt üblicherweise unter atmosphärischem Druck, sie kann jedoch auch unter vermindertem oder erhöhtem Druck ablaufen. Ein geeigneter Druckbereich liegt zwischen 1 und 5 bar.

Die Säuregruppen-haltigen Monomere b) werden vorzugsweise in der Salzform eingesetzt. Der pH-Wert wird zur Copolymerisation vorzugsweise auf einen Wert im Bereich von 6 bis 9 eingestellt. Durch Einsatz eines üblichen Puffers oder durch Messung des pH-Werts und entsprechende Zugabe von Säure oder Base kann der pH-Werts während der Polymerisation konstant gehalten werden.

Zur Herstellung der Polymerisate können die Monomeren mit Hilfe von Radikale bildenden Initiatoren polymerisiert werden.

Als Initiatoren für die radikalische Polymerisation können die hierfür üblichen Peroxo- und/oder Azo-Verbindungen eingesetzt werden, beispielsweise Alkali- oder Ammoniumperoxidisulfate, Diacetylperoxid, Dibenzoylperoxid, Succinylperoxid, Di-tert.-butylperoxid, tert.-Butylperbenzoat, tert.-Butylperpivalat, tert.-Butylperoxy-2-ethylhexanoat, tert.-Butylpermaleinat, Cumolhydroperoxid, Diisopropylperoxidicarbamat, Bis-(o-toluoyl)-peroxid, Didecanoylperoxid, Dioctanoylperoxid, Dilauroylperoxid, tert.-Butylperisobutyrat, tert.-Butylperacetat, Di-tert.-Amylperoxid, tert.-Butylhydroperoxid, Azo-bis-isobutyronitril, Azo-bis-(2-amidonopropan)dihydrochlorid oder 2-2'-Azo-bis-(2-methyl-butyronitril). Geeignet sind auch Initiatormischungen oder Redox-Initiator-Systeme, wie z.B. Ascorbinsäure/Eisen(II)sulfat/Natriumperoxodisulfat, tert.-Butylhydroperoxid/Natriumdisulfit, tert.-Butylhydroperoxid/Natriumhydroxymethansulfinat, H₂O₂/Cu¹.

Zur Einstellung des Molekulargewichts kann die Polymerisation in Gegenwart wenigstens eines Reglers erfolgen. Als Regler können die üblichen, dem Fachmann bekannten Verbindungen, wie z. B. Schwefelverbindungen, z. B. Mercaptoethanol, 2-Ethylhexylthioglycolat, Thioglycolsäure oder Dodecylmercaptan sowie Tribromchlormethan oder andere Verbindungen, die regelnd auf das Molekulargewicht der erhaltenen Polymerisate wirken, eingesetzt werden.

Die Molmasse der wasserlöslichen amphoteren Polymere beträgt beispielsweise mindestens 10000, vorzugsweise mindestens 100000 Dalton und insbesondere mindestens 500000 Dalton. Die Molmassen der Polymerisate betragen dann z. B. 10000 bis 10 Millionen, vorzugsweise 100000 bis 5 Millionen (z.B. bestimmt durch Lichtstreuung). Dieser Molmassenbereich entspricht beispielsweise K-Werten von 5 bis 300, vorzugsweise 10 bis 250 (bestimmt nach H. Fikentscher in 5%iger wässriger Kochsalzlösung bei 25°C und einer Polymerkonzentration von 0,5 Gew.-%).

Die Hydrolyse der nach dem oben beschriebenen Verfahren erhaltenen Polymerisate erfolgt nach bekannten Verfahren durch Einwirkung von Säuren, Basen oder Enzymen. Hierbei entstehen aus den einpolymerisierten Monomeren der oben angegebenen Formel I durch Abspaltung der Gruppierung 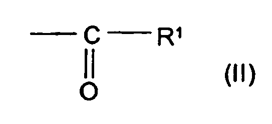 wobei R¹die dafür in Formel I angegebene Bedeutung hat, Polymerisate, die Vinylamineinheiten der Formel III 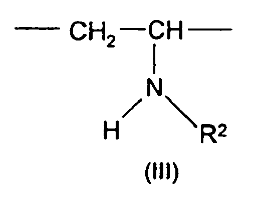 enthalten, in der R² die in Formel I angegebene Bedeutung hat. Bei Verwendung von Säuren als Hydrolysemittel liegen die Einheiten III als Ammoniumsalz vor. Die Copolymerisate enthalten somit zusätzlich zu den bei der Polymerisation eingeführten anionogenen/anionischen Gruppen auch kationogene/kationische Gruppen und sind somit amphoter.

Die Copolymerisate können zu 0,1 bis 100 Mol-%, wie z.B. 70 bis 100 Mol-% hydrolysiert sein. In den meisten Fällen beträgt der Hydrolysegrad der Homo- und Copolymerisate 1 bis 98 mol-%, vorzugsweise 10 bis 95 mol-%. Zusätzlich können die Copolymerisate Amidineinheiten enthalten, die z. B. durch Reaktion von Ameisensäure mit zwei benachbarten Aminogruppen oder durch intramolekulare Reaktion einer Aminogruppe mit einer benachbarten Amidgruppe z. B. von einpolymerisiertem N-Vinylformamid entsteht.

Die bei der Hydrolyse von Vinylformamideinheiten mit Säuren oder Basen entstehenden Amidineinheiten weisen die Formel IV 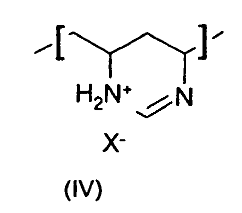 in der X⁻ ein Anion bedeutet.

Im Folgenden wird für die amphoteren Copolymerisate immer die Summe von Vinylamin - und Amidineinheiten angegeben, die aus den einpolymerisierten Einheiten der N-Vinylcarbonsäureamide entstehen.

Die hydrolysierten Copolymerisate enthalten beispielsweise
- 1 bis 98 Mol-%, vorzugsweise 1 bis 75 Mol-% Vinylcarbonsäureamideinheiten,
- 1 bis 98 Mol-%, vorzugsweise 1 bis 55 Mol-% Einheiten von monoethylenisch ungesättigten Sulfonsäuren, Phosphonsäuren, Phosphorsäureestern und Derivaten davon,
- 0 bis 80 Mol-%, vorzugsweise 0,1 bis 45 Mol-% Einheiten von monoethylenisch ungesättigten Mono- und Dicarbonsäuren, deren Salzen und Dicarbonsäureanhydriden,
- 1 bis 98 Mol-%, vorzugsweise 1 bis 55 Mol-% Vinylamin- und/oder Amidineinheiten,
- bis zu 30 Mol-% Einheiten von anderen monoethylenisch ungesättigten Verbindungen, die frei von Nitrilgruppen sind.

Besonders bevorzugt sind solche hydrolysierten Copolymerisate, die
- 5 bis 70 Mol-% Vinylcarbonsäureamideinheiten,
- 3 bis 30 Mol-% Einheiten von monoethylenisch ungesättigten Sulfonsäuren, Phosphonsäuren und Salzen davon,
- 0 bis 45 Mol-% Einheiten von Acrylsäure, Methacrylsäure, Salzen und Gemischen davon
- 10 bis 50 Mol-% Vinylamineinheiten in Salzform und/oder Amidineinheiten
enthalten.

Die erfindungsgemässen wässrigen Zusammensetzungen enthalten vorzugsweise 1 bis 50 Gew.-%, vorzugsweise 10 bis 40 Gew.-%, mindestens eines feinteiligen Füllstoffes. Die Menge an amphoterem wasserlöslichen Polymer beträgt beispielsweise 0,1 bis 5 Gew.-%, vorzugsweise 0,25 bis 3 Gew.-%, bezogen auf Füllstoffe.

Vorzugsweise liegen die erfindungsgemässen wässrigen Zusammensetzungen als eine Anschlämmung vor.

Als Füllstoffe kommen alle üblicherweise in der Papierindustrie einsetzbaren Pigmente in Betracht, z.B. Calciumcarbonat, das in Form von gemahlenen (GCC) Kalk, Kreide, Marmor oder präzipitiertem Calciumcarbonat (PCC) eingesetzt werden kann, Talkum, Kaolin, Bentonit, Satinweiß, Calciumsulfat, Bariumsulfat und Titandioxid. Man kann auch Mischungen aus zwei oder mehreren Pigmenten einsetzen. Der Teilchendurchmesser der feinteiligen Füllstoffe liegt beispielsweise zwischen 40 und 90% kleiner 2µm.

Die Füllstoffe werden beispielsweise durch Einbringen in Wasser zu einer wässrigen Anschlämmung verarbeitet. Präzipitiertes Calciumcarbonat wird üblicherweise in Abwesenheit von Dispergiermitteln in Wasser aufgeschlämmt. Um wässrige Anschlämmungen der übrigen Füllstoffe herzustellen, verwendet man in der Regel ein anionisches Dispergiermittel, z.B. Polyacrylsäuren mit einer mittleren Molmasse Mw von beispielsweise 1000 bis 40.000 Dalton. Falls man ein anionisches Dispergiermittel verwendet, so setzt man davon beispielsweise 0,01 bis 0,5 Gew.-% vorzugsweise 0,2 bis 0,3 Gew.-% zur Herstellung wässriger Füllstoffanschlämmungen ein. Die in Gegenwart von anionischen Dispergiermitteln in Wasser dispergierten feinteiligen Füllstoffe sind anionisch. Die wässrigen Anschlämmungen enthalten beispielsweise 10 bis 30 Gew-%, meistens 15 - 25 Gew.-% mindestens eines Füllstoffs.

Um die erfindungsgemäßen wässrigen Anschlämmungen von feinteiligen Füllstoffen herzustellen, behandelt man wässrige Anschlämmungen von gegebenenfalls anionisch dispergierten feiteiligen Füllstoffen mit mindestens einem wasserlöslichen amphoteren Polymer. Beispielsweise kann man bis zu einer 1 bis 50 Gew.-% mindestens eines feinteiligen Füllstoffs enthaltenden wässrigen Anschlämmung 0,1 bis 5 Gew.-% bezogen auf Füllstoffe, eines wasserlöslichen amphoteren Polymers zusetzen oder eine wässrige Anschlämmung eines feinteiligen Füllstoffs in eine wässrige Lösung eines amphoteren Polymers eintragen und die Komponenten jeweils mischen. Das Behandeln der wässrigen Anschlämmung von feinteiligen Füllstoffen mit den amphoteren Polymeren kann kontinuierlich oder diskontinuierlich durchgeführt werden. Beim Zusammenbringen von wässrigen Anschlämmungen feinteiliger Füllstoffe und wässrigen Lösungen amphoterer Polymere werden die Füllstoffteilchen zumindest teilweise mit den amphoteren Polymeren überzogen bzw. imprägniert. Das Mischen der Komponenten erfolgt beispielsweise in einem Scherfeld. Meistens ist es ausreichend, wenn man die Komponenten nach dem Zusammenbringen rührt oder sie in einem Scherfeld eines Ultraturraxgerätes behandelt. Das Zusammenbringen und Mischen der Bestandteile der wässrigen Anschlämmungen kann beispielsweise in dem Temperaturbereich von 0°c bis 95°C, vorzugsweise 10 bis 70°C erfolgen. Meistens mischt man die Komponenten bei der jeweiligen Raumtemperatur bis zu einer Temperatur von 40°C. der pH-Wert der mit amphoteren Polymeren behandelten wässrigen Anschlämmungen von Füllstoffen beträgt beispielsweise 5 bis 11, vorzugsweise 6 bis 9, wobei der pH-Wert von Calciumcarbonat enthaltenden Anschlämmungen vorzugsweise mehr als 6,5 beträgt.

Die erfindungsgemäß eingesetzten Copolymere weisen eine größere Anzahl an die Polymerkette gebundene, ionisch dissoziierbarer/dissoziierter Gruppen entgegengesetzter Ladbarkeit/Ladung auf. Beim Inkontaktbringen mit wässrigen Anschlämmungen von feinteiligen Füllstoffen können Coulomb-Wechselwirkungen auftreten. So erfolgt bei dem Inkontaktbringen im Allgemeinen eine zumindest teilweise Belegung der Oberfläche der Polymerteilchen. Dies läßt sich beispielsweise durch Transmissionselektronenmikroskopie (TEM) nachweisen. Die Oberflächenladung kann zusätzlich durch Zeta-Potential-Messungen gemessen werden, die belegen, das die Ladung außen sitzt. Die elektrophoretische Mobilität bzw. das Zetapotential lassen sich laseroptisch bestimmen. Als Messinstrument dient z.B. ein Zetasizer 3000 HS der Firma Malvern Instruments Ltd..

Die amphoteren Copolymerisate können eine anionische oder eine kationische Überschußladung tragen oder auch elektrisch neutral sein, wenn gleich viele anionische und kationische Gruppen im Copolymerisat vorliegen. In Abhängigkeit vom Ladungszustand der amphoteren Copolymerisate sind die damit hergestellten wässrigen Anschlämmungen der Füllstoffe anionisch, kationisch oder elektrisch neutral wenn die amphoteren Copolymerisate die gleiche Menge an kationischer and anionischer Ladung aufweisen.

Vorzugsweise werden solche amphoteren Copolymerisate eingesetzt, die bei pH 7 sowohl im anionischen als auch im kationischen Bereich eine Ladungsdichte von vorzugsweise höchstens 1 meq/g haben.

Ein weiterer Gegenstand der Erfindung ist die Verwendung der oben beschriebenen wäßrigen Zusammensetzungen als Zusatz zum Papierstoff bei der Herstellung von füllstoffhaltigem Papier, füllstoffhaltigem Karton oder füllstoffhaltigern Pappe durch Entwässern des Papierstoffs.

Die Erfindung wird anhand der folgenden, nicht einschränkenden Beispiele näher erläutert.

### Beispiele

### 1.) Analysenmethoden

Die K-Werte der Copolymerisate wurden nach H. Fikentscher, Cellulosechemie, Band 13, 48-64 und 71-74 (1932) in 1.0 % wässriger Kochsalzlösung bei 25°C, bei einem pH-Wert von 7 und einer Polymerkonzentration von 0.1 Gew.-% bestimmt.

Der Hydrolysegrad der Polymerisate kann durch enzymatische Analyse der bei der Hydrolyse freigesetzten Ameisensäure/Formiate bestimmt werden.

Die strukturelle Zusammensetzung der Polymerisate wurde aus der eingesetzten Monomerenmischung, dem Hydrolysegrad und dem mittels ¹³C-NMR-Spektrokopie bestimmten Verhältnis von Vinylamin/Amidin errechnet. Dazu wurde das Verhältnis der Integrale der beiden folgenden Signale ausgewertet:

| Gruppe | Lage des Signals [ppm] | Fläche |
|---|---|---|
| HCOO⁻ | 173 | F (Formiat) |
| -N=CH-N- | 152 | F (Amidine) |

### 2.) Herstellung der Polymeren

### Beispiel 1

In einer 2 I Glasapparatur mit Ankerrührer, Rückflusskühler, Innenthermometer und Stickstoffeinleitungsrohr werden 1339.0 g destilliertes Wasser, 3.8 g 75%ige Phosphorsäure, 202.0 g 25%ige Natriumvinylsulfonatlösung in Wasser und 69.9 g Acrylsäure bei einer Drehzahl von 100 UpM gemischt. Durch Zutropfen von ca. 84 g einer 50%igen wässrigen Natronlauge wird der pH auf 7.0 eingestellt. Dann werden 181,4 g Vinylformamid zugegeben. Unter Einleiten von Stickstoff wird die Mischung auf 60°C geheizt. Nach Erreichen der Temperatur werden innerhalb von 5 min 20.0 g einer 1.5%igen wässrigen Lösung von 2,2'-Azobis(2-methylpropionamidin)dihydrochlorid zugegeben. Weitere 81.5 g einer 1.5%igen wässrigen Lösung von 2,2'-Azobis(2-methylpropionamidin)dihydrochlorid werden innerhalb von 4 Stunden zugefahren. Nach einer Polymerisationszeit von 3 Stunden wird die Temperatur auf 75°C erhöht. Nach einer weiteren Stunde bei 75 °C werden 0.75 g 2,2'-Azobis(2-methylpropionamidin)dihydrochlorid in 20.0 g destilliertem Wasser zugesetzt und 2 Stunden bei 75°C nachpolymerisiert. Nach dem Abkühlen auf Raumtemperatur wird eine leicht trübe, farblose, stark viskose Lösung mit einem Festgehalt von 18,4 % erhalten. Der K-Wert des Terpolymeren beträgt 128.

500.0 g des vorstehenden Produktes werden in einem 1 I Vierhalskolben mit Blattrührer, Innenthermometer, Tropftrichter und Rückflusskühler bei einer Rührerdrehzahl von 80 UpM auf 80°C erhitzt. Es werden zuerst 6.3 g einer 40%igen wässrigen Natriumdisulfitlösung und anschließend 33.3 g einer 25%igen wässrigen Natronlauge so zugegeben, dass sie sich gut untermischen. Das Reaktionsgemisch wird 4,5 Stunden bei 80°C gehalten und dann auf Raumtemperatur abgekühlt. Durch die langsame Zugabe von ca. 17.2 g konz. Salzsäure wird der pH auf 7 eingestellt und anschließend 234.0 g destilliertes Wasser zur Verdünnung zugegeben. Nach dem Abkühlen auf Raumtemperatur wird eine viskose, farblose, leicht trübe Lösung mit einem Festgehalt von 13.5 % erhalten. Der Hydrolysegrad beträgt 38% (bezogen auf VFA).

Das erhaltene Polymer I weißt folgende Struktureinheiten auf:

| | |
|---|---|
| Vinylformamid: | 35 mol % |
| Vinylamin und Amidin: | 27 mol % |
| Natriumvinylsulfonat: | 11 mol % |
| Natriumacrylat: | 27 mol % |

### Beispiel 2

In einer 2 I Glasapparatur mit Ankerrührer, Rückflusskühler, Innenthermometer und Stickstoffeinleitungsrohr werden 1339.0 g destilliertes Wasser, 3.8 g 75%ige Phosphorsäure, 202.0 g 25%ige Natriumvinylsulfonatlösung in Wasser, und 69.9 g Acrylsäure bei einer Drehzahl von 100 UpM gemischt. Durch Zutropfen von ca. 84 g einer 50%igen wässrigen Natronlauge wird der pH auf 6.8 eingestellt. Dann werden 181.4 g Vinylformamid zugegeben. Unter Einleiten von Stickstoff wird die Mischung auf 62°C erhitzt. Nach Erreichen der Temperatur werden innerhalb von 5 min 20.0 g einer 1.5%igen wässrigen Lösung von 2,2'-Azobis(2-methylpropionamidin)dihydrochlorid zugegeben. Weitere 81,5 g einer 1.5%igen wässrigen Lösung von 2,2'-Azobis(2-methylpropionamidin)dihydrochlorid werden innerhalb von 4 Stunden zugefahren. Nach einer Polymerisationszeit von 3 Stunden wird die Temperatur auf 75°C erhöht. Nach einer weiteren Stunde bei 75 °C werden 0,75 g 2,2'-Azobis(2-methylpropionamidin)dihydrochlorid in 20.0 g destilliertem Wasser zugesetzt und 2 Stunden bei 75°C nachpolymerisiert. Nach dem Abkühlen auf Raumtemperatur wird eine leicht trübe, farblose, stark viskose Lösung mit einem Festgehalt von 18.6 % erhalten. Der K-Wert des Terpolymeren beträgt 122.

500.0 g des vorstehenden Produktes werden in einem 1 I Dreihalskolben mit Blattrührer, Innenthermometer, Tropftrichter und Rückflusskühler bei einer Rührerdrehzahl 80 UpM auf 80°C erhitzt. Es werden zuerst 6.3 g einer 25%igen wässrigen Natriumdisulfitlösung und anschließend 60.5 g einer 25%igen wässrigen Natronlauge so zugegeben, dass sie sich gut untermischen. Das Reaktionsgemisch wird 3 Stunden bei 80°C gehalten und dann auf Raumtemperatur abgekühlt. Durch die langsame Zugabe von ca. 31 g konz. Salzsäure wird der pH auf 7.2 eingestellt und anschließend 234.0 g destilliertes Wasser zur Verdünnung zugegeben. Nach dem Abkühlen auf Raumtemperatur wird eine viskose, farblose, leicht trübe Lösung mit einem Festgehalt von 15.0 % erhalten. Der Hydrolysegrad beträgt 59% (bezogen auf VFA).

Das erhaltene Polymer II weißt folgende Struktureinheiten auf:

| | |
|---|---|
| Vinylformamid: | 18 mol % |
| Vinylamin und Amidin: | 43 mol % |
| Natriumvinylsulfonat: | 11 mol % |
| Natriumacrylat: | 28 mol % |

### Beispiel 3

In einer 2 1 Glasapparatur mit Ankerrührer, Rückflusskühler, Innenthermometer und Stickstoffeinleitungsrohr werden 345.0 g destilliertes Wasser, 3.8 g 75%ige Phosphorsäure, 202.0 g 25%ige Natriumvinylsulfonatlösung in Wasser, und 69.9 g Acrylsäure bei einer Drehzahl von 100 UpM gemischt. Durch Zutropfen von ca. 82 g einer 50%igen wässrigen Natronlauge wird der pH auf 6.8 eingestellt. Dann werden 181.4 g Vinylformamid zugegeben. Unter Einleiten von Stickstoff wird die Mischung auf 55°C geheizt. Nach Erreichen der Temperatur werden innerhalb von 5 min 20.0 g einer 1.5%igen wässrigen Lösung von 2,2'-Azobis(2-methylpropionamidin)dihydrochlorid zugegeben. Weitere 51.5 g einer 1.5%igen wässrigen Lösung von 2.2'-Azobis(2-methylpropionamidin)dihydrochlorid werden innerhalb von 3 Stunden zugefahren. Nach einer Polymerisationszeit von 1 Stunde wurden 200.0 g destilliertes Wasser zur Verdünnung zugegeben. Nach 2 Stunden Polymerisationszeit wurden weitere 200.0 g destilliertes Wasser zur Verdünnung zugegeben. Nach 3 Stunden werden 30.0 g einer 1.5%igen wässrigen Lösung von 2,2'-Azobis(2-methylpropionamidin)dihydrochlorid 0.8 g 2,2'-Azobis(2-methylpropionamidin)dihydrochlorid zugesetzt und die Temperatur für 2 Stunden auf 75°C erhöht. Anschließend wir mit weiteren 600.0 g destilliertem Wasser verdünnt. Nach dem Abkühlen auf Raumtemperatur wird eine leicht trübe, farblose, stark viskose Lösung mit einem Festgehalt von 18,4 % erhalten. Der K-Wert des Terpolymeren beträgt 145.

500 g des vorstehenden Produktes werden in einem 1 I Vierhalskolben mit Blattrührer, Innenthermometer, Tropftrichter und Rückflusskühler bei einer Rührerdrehzahl 80 UpM auf 80°C erhitzt. Es werden 200g destilliertes Wasser, 6,3 g einer 40%igen wässrigen Natriumdisulfitlösung und anschließend 35,2 g einer 25%igen wässrigen Natronlauge so zugegeben, dass sie sich gut untermischen. Das Reaktionsgemisch wird 3 Stunden bei 80°C gehalten und dann auf Raumtemperatur abgekühlt. Durch die langsame Zugabe von ca. 17 g konz. Salzsäure wird der pH auf 7.9 eingestellt und anschließend 42.8 g destilliertes Wasser zur Verdünnung zugegeben. Nach dem Abkühlen auf Raumtemperatur wird eine viskose, farblose, leicht trübe Lösung mit einem Festgehalt von 13.3 % erhalten. Der Hydrolysegrad beträgt 37% (bezogen auf VFA).

Das erhaltene Polymer III weißt folgende Struktureinheiten auf:

| | |
|---|---|
| Vinylformamid: | 36 mol % |
| Vinylamin und Amidin: | 26 mol % |
| Natriumvinylsulfonat: | 11 mol % |
| Natriumacrylat: | 27 mol % |

### Beispiel 4

In einer 2 I Glasapparatur mit Ankerrührer, Rückflusskühler, Innenthermometer und Stickstoffeinleitungsrohr werden 25.0 g destilliertes Wasser, 1.6 g 75%ige Phosphorsäure und 442.9 g 25%ige Natriumvinylsulfonatlösung in Wasser bei einer Drehzahl von 100 UpM gemischt. Durch Eintropfen von ca. 15.2 g 50%iger wässriger Natronlauge wird der pH auf 6.5 eingestellt. Dann werden 181.4 g Vinylformamid zugegeben. Unter Einleiten von Stickstoff wird die Mischung auf 50°C geheizt. Nach Erreichen der Temperatur werden innerhalb von 5 min 14.0 g einer 1.5%igen wässrigen Lösung von 2,2'-Azobis(2-methylpropionamidin)dihydrochlorid zugegeben. Weitere 56.0 g einer 1.5%igen wässrigen Lösung von 2,2'-Azobis(2-methylpropionamidin)dihydrochlorid werden innerhalb von 4 Stunden zugefahren. Nach Ende der Zugabe wird die Reaktionsmischung weitere 4 Stunden bei 50 °C gehalten. Dann werden 0.2 g 2,2'-Azobis(2-methylpropionamidin)dihydrochlorid in 20 g destilliertem Wasser zugesetzt und die Temperatur für weitere 3 Stunden bei 50°C gehalten. Anschließend wird die Temperatur für 2 Stunden auf 75°C erhöht. Die erhaltene Lösung wird mit 250.0 g destilliertem Wasser verdünnt und auf Raumtemperatur abgekühlt
Erhalten wird eine klare, gelbliche, viskose Lösung mit einem Festgehalt von 29.6 %. Der K-Wert des Copolymeren beträgt 81.

360 g des vorstehenden Produktes werden in einem 1 I Dreihalskolben mit Blattrührer, Innenthermometer, Tropftrichter und Rückflusskühler bei einer Rührerdrehzahl von 80 UpM auf 80°C erhitzt. Es werden zuerst 4.5 g einer 40%igen wässrigen Natriumdisulfitlösung und anschließend 48.1 g einer 25%igen wässrigen Natronlauge so zugegeben, dass sie sich gut untermischen. Das Reaktionsgemisch wird 3.5 Stunden bei 80°C gehalten und dann auf Raumtemperatur abgekühlt. Durch die langsame Zugabe von ca. 23 g konz. Salzsäure wird der pH auf 7.6 eingestellt.
Es wird eine viskose, gelbe, klare Lösung mit einem Festgehalt von 28.5 % erhalten. Der Hydrolysegrad beträgt 31 % (bezogen auf VFA).

Das erhaltene Polymer IV weißt folgende Struktureinheiten auf:

| | |
|---|---|
| Vinylformamid: | 48 mol % |
| Vinylamin und Amidin: | 25 mol % |
| Natriumvinylsulfonat: | 27 mol % |

### Beispiel 5

In einer 2 I Glasapparatur mit Ankerrührer, Rückflusskühler, Innenthermometer und Stickstoffeinleitungsrohr werden 733.3 g destilliertes Wasser, 1.6 g 75%ige Phosphorsäure, 11.7 g Vinylphosphonsäure (95%) und 44,3 g Acrylsäure bei einer Drehzahl von 100 UpM gemischt. Durch Zutropfen von ca. 63 g einer 50%igen wässrigen Natronlauge wird der pH auf 6.7 eingestellt. Dann werden 95.6 g Vinylformamid zugegeben. Unter Einleiten von Stickstoff wird die Mischung auf 70°C geheizt. Nach Erreichen der Temperatur werden innerhalb von 5 m in 10.0 g einer 1.5%igen wässrigen Lösung von 2,2'-Azobis(2-methylpropionamidin)dihydrochlorid zugegeben. Weitere 41.0 g einer 1.5%igen wässrigen Lösung von 2,2'-Azobis(2-methylpropionamidin)dihydrochlorid werden innerhalb von 4 Stunden zugefahren. Nach End des Zulaufs wird die Temperatur auf 75°C erhöht und 0.45 g 2,2'-Azobis(2-methylpropionamidin)dihydrochlorid in 20 g destilliertem Wasser zugesetzt. Nach weiteren 2 Stunden bei 75°C ist die Polymerisation beendet und das Produkt wird auf Raumtemperatur abgekühlt. E wird eine leicht trübe, farblose, viskose Lösung mit einem Festgehalt von 13.7 % erhalten. Der K-Wert des Terpolymeren beträgt 125. 500 g des vorstehenden Produktes werden in einem 1 I Dreihalskolben mit Blattrührer, Innenthermometer, Tropftrichter und Rückflusskühler bei einer Rührerdrehzahl 80 UpM auf 80°C erhitzt. Es werden zuerst 6.3 g einer 40%igen wässrigen Natriumdisulfitlösung und anschließend 27.7 g einer 25%igen wässrigen Natronlauge so zugegeben, dass sie sich gut untermischen. Das Reaktionsgemisch wird 4 Stunden bei 80°C gehalten und dann auf Raumtemperatur abgekühlt. Durch die langsame Zugabe von ca. 17 g konz. Salzsäure wird der pH auf 7.5 eingestellt und anschließend 250.0 g destilliertes Wasser zur Verdünnung zugegeben. Nach dem Abkühlen auf Raumtemperatur wird eine viskose, farblose, klare Lösung mit einem Festgehalt von 12.4 % erhalten. Der Hydrolysegrad beträgt 25% (bezogen auf VFA).

Das erhaltene Polymer V weißt folgende Struktureinheiten auf:

| | |
|---|---|
| Vinylformamid: | 46 mol % |
| Vinylamin und Amidin: | 17 mol % |
| Natriumvinylphosphonat | 5 mol% |
| Natriumacrylat: | 32 mol % |

### Beispiel 6

In einer 2 I Glasapparatur mit Ankerrührer, Rückflusskühler, Innenthermometer und Stickstoffeinleitungsrohr werden 200.0 g destilliertes Wasser, 3.7 g 75%ige Phosphorsäure, 32.1 g Vinylphosphonsäure (95%) und 30.5 g Acrylsäure in Wasser bei einer Drehzahl von 100 UpM gemischt. Durch Eintropfen von ca. 59 g 50%iger wässriger Natronlauge wird der pH auf 6.5 eingestellt. Dann werden 150.0 g Vinylformamid zugegeben. Unter Einleiten von Stickstoff wird die Mischung auf 50°C geheizt. Nach Erreichen der Temperatur werden innerhalb von 5 min 14.0 g einer 1.5%igen wässrigen Lösung von 2,2'-Azobis(2-methylpropionamidin)dihydrochlorid zugegeben. Weitere 53.0 g einer 1.5%igen wässrigen Lösung von 2,2'-Azobis(2-methylpropionamidin)dihydrochlorid werden innerhalb von 4 Stunden zugefahren. Nach Ende der Zugabe wird die Reaktionsmischung weitere 4 Stunden bei 50 °C gehalten. Dann werden 0.25 g 2,2'-Azobis(2-methylpropionamidin)dihydrochlorid in 20.0 g destilliertem Wasser zugesetzt und die Temperatur für weitere 3 Stunden bei 50°C gehalten.

Anschließend wird die Temperatur für 2 Stunden auf 75°C erhöht. Die erhaltene Lösung wird mit 250.0 g destilliertem Wasser verdünnt und auf Raumtemperatur abgekühlt.
Erhalten wird eine leicht trübe, farblose, viskose Lösung mit einem Festgehalt von 30,1 %. Der K-Wert des Terpolymeren beträgt 85

400 g des vorstehenden Produktes werden in einem 1 I Dreihalskolben mit Blattrührer, Innenthermometer, Tropftrichter und Rückflusskühler bei einer Rührerdrehzahl von 80 UpM auf 80°C erhitzt. Es werden zuerst 5.0 g einer 40%igen wässrigen Natriumdisulfitlösung und anschließend 50.9 g einer 25%igen wässrigen Natronlauge so zugegeben, dass sie sich gut untermischen. Das Reaktionsgemisch wird 3 Stunden bei 80°C gehalten und dann auf Raumtemperatur abgekühlt. Durch die langsame Zugabe von ca. 29 g konz. Salzsäure wird der pH auf 7.5 eingestellt.
Es wird eine viskose, farblose , leicht trübe Lösung mit einem Festgehalt von 29.0 % erhalten. Der Hydrolysegrad beträgt 27% (bezogen auf VFA).

Das erhaltene Polymer VI weißt folgende Struktureinheiten auf:

| | |
|---|---|
| Vinylformamid: | 52 mol % |
| Vinylamin und Amidin: | 21 mol % |
| Natriumvinylphosphonat: | 11 mol % |
| Natriumacrylat: | 16 mol % |

### 3.) Behandlung von Füllstoffen

### Beispiel 7

5,4 g einer 13,5%-tigen wässrigen Lösung eines amphoteren Copolymeren aus Beispiel 1 wurden in einem Becherglas vorgelegt und anschließend mit 30g Trinkwasser verdünnt. Anschliessend gab man 150g einer 20%-tigen Aufschlämmung von präzipitiertem Calciumcarbinat (PCC) in Wasser zu. Während der Zugabe der Slurry und danach wurde die Mischung mit Hilfe eines Heiltof-Rührers bei 1000 Umdrehungen pro Minute (UpM) gerührt. Der pH-Wert der Mischung wurde anschließend auf 8,5 eingestellt. Die mit Hilfe der Mikroelektrophorese wurde die Mobilität der Füllstoffteilchen bei pH 8,5 und bei pH 7 gemessen. Die elektrophoretische Mobilität nimmt bei beiden pH-Einstellungen einen leicht negativen Wert an.

### Beispiel 8

4,8 g einer 15%-tigen wässrigen Lösung eines amphoteren Copolymeren aus Beispiel 2 wurden in einem Becherglas vorgelegt und anschließend mit 30g Trinkwasser verdünnt. Anschliessend gab man 150g einer 20%-tigen Aufschlämmung von präzipitiertem Calciumcarbinat (PCC) in Wasser zu. Während der Zugabe der Slurry und danach wurde die Mischung mit Hilfe eines Heiltof-Rührers bei 1000 Umdrehungen pro Minute (UpM) gerührt. Der pH-Wert der Mischung wurde anschließend auf 8,5 eingestellt. Die mit Hilfe der Mikroelektrophorese wurde die Mobilität der Füllstoffteilchen bei pH 8,5 und bei pH 7 gemessen. Die elektrophoretische Mobilität nimmt bei beiden pH-Einstellungen einen leicht negativen Wert an.

### Beispiel 9

5,4 g einer 13,3%-tigen wässrigen Lösung eines amphoteren Copolymeren aus Beispiel 3 wurden in einem Becherglas vorgelegt und anschließend mit 30g Trinkwasser verdünnt. Anschliessend gab man 150g einer 20%-tigen Aufschlämmung von präzipitiertem Calciumcarbinat (PCC) in Wasser zu. Während der Zugabe der Slurry und danach wurde die Mischung mit Hilfe eines Heiltof-Rührers bei 1000 Umdrehungen pro Minute (UpM) gerührt. Der pH-Wert der Mischung wurde anschließend auf 8,5 eingestellt. Die mit Hilfe der Mikroelektrophorese wurde die Mobilität der Füllstoffteilchen bei pH 8,5 und bei pH 7 gemessen. Die elektrophoretische Mobilität nimmt bei beiden pH-Einstellungen einen leicht negativen Wert an.

### Beispiel 10

2,5 g einer 28,5%-tigen wässrigen Lösung eines amphoteren Copolymeren aus Beispiel 4 wurden in einem Becherglas vorgelegt und anschließend mit 30g Trinkwasser verdünnt. Anschliessend gab man 150g einer 20%-tigen Aufschlämmung von präzipitiertem Calciumcarbinat (PCC) in Wasser zu. Während der Zugabe der Slurry und danach wurde die Mischung mit Hilfe eines Heiltof-Rührers bei 1000 Umdrehungen pro Minute (UpM) gerührt. Der pH-Wert der Mischung wurde anschließend auf 8,5 eingestellt. Die mit Hilfe der Mikroelektrophorese wurde die Mobilität der Füllstoffteilchen bei pH 8,5 und bei pH 7 gemessen. Die elektrophoretische Mobilität nimmt bei beiden pH-Einstellungen einen leicht negativen Wert an.

### Beispiel 11

5,8 g einer 12,4%-tigen wässrigen Lösung eines amphoteren Copolymeren aus Beispiel 5 wurden in einem Becherglas vorgelegt und anschließend mit 30g Trinkwasser verdünnt. Anschliessend gab man 150g einer 20%-tigen Aufschlämmung von präzipitiertem Calciumcarbinat (PCC) in Wasser zu. Während der Zugabe der Slurry und danach wurde die Mischung mit Hilfe eines Heiltof-Rührers bei 1000 Umdrehungen pro Minute (UpM) gerührt. Der pH-Wert der Mischung wurde anschließend auf 8,5 eingestellt. Die mit Hilfe der Mikroelektrophorese wurde die Mobilität der Füllstoffteilchen bei pH 8,5 und bei pH 7 gemessen. Die elektrophoretische Mobilität nimmt bei beiden pH-Einstellungen einen deutlich negativen Wert an.

### Beispiel 12

2,5 g einer 29%-tigen wässrigen Lösung eines amphoteren Copolymeren aus Beispiel 6 wurden in einem Becherglas vorgelegt und anschließend mit 30g Trinkwasser verdünnt. Anschliessend gab man 150g einer 20%-tigen Aufschlämmung von präzipitiertem Calciumcarbinat (PCC) in Wasser zu. Während der Zugabe der Slurry und danach wurde die Mischung mit Hilfe eines Heiltof-Rührers bei 1000 Umdrehungen pro Minute (UpM) gerührt. Der pH-Wert der Mischung wurde anschließend auf 8,5 eingestellt. Die mit Hilfe der Mikroelektrophorese wurde die Mobilität der Füllstoffteilchen bei pH 8,5 und bei pH 7 gemessen. Die elektrophoretische Mobilität nimmt bei beiden pH-Einstellungen einen leicht negativen Wert an.

### Beispiel 13

5,4 g einer 13,5%-tigen wässrigen Lösung eines amphoteren Copolymeren aus Beispiel 1 wurden in einem Becherglas vorgelegt und anschließend mit 30g Trinkwasser verdünnt. Anschliessend gab man 150g einer 20%-tigen Aufschlämmung von gemahlenem Calciumcarbinat (GCC) in Wasser zu. Während der Zugabe der Slurry und danach wurde die Mischung mit Hilfe eines Heiltof-Rührers bei 1000 Umdrehungen pro Minute (UpM) gerührt. Der pH-Wert der Mischung wurde anschließend auf 8,5 eingestellt. Die mit Hilfe der Mikroelektrophorese wurde die Mobilität der Füllstoffteilchen bei pH 8,5 und bei pH 7 gemessen. Die elektrophoretische Mobilität nimmt bei beiden pH-Einstellungen einen leicht negativen Wert an.

### Vergleichsbeispiel (nach JP4080597 40A)

6 g einer 12%-tigen wässrigen Lösung eines amphoteren Copolymeren nach Beispiel 1 in JP4080597 40A wurden in einem Becherglas vorgelegt und anschließend mit 30g Trinkwasser verdünnt. Anschliessend gab man 150g einer 20%-tigen Aufschlämmung von präzipitiertem Calciumcarbinat (PCC) in Wasser zu. Während der Zugabe der Slurry und danach wurde die Mischung mit Hilfe eines Heiltof-Rührers bei 1000 Umdrehungen pro Minute (UpM) gerührt. Der pH-Wert der Mischung wurde anschließend auf 8,5 eingestellt. Die mit Hilfe der Mikroelektrophorese wurde die Mobilität der Füllstoffteilchen bei pH 8,5 und bei pH 7 gemessen. Die elektrophoretische Mobilität nimmt bei beiden pH-Einstellungen einen leicht negativen Wert an.

### 4.) Herstellung von füllstoffhaltigem Papier

### Papier Typ "A"

### Beispiele 14 bis 20

Eine Mischung aus TMP (Thermo-mechanical pulp) und Holzschliff wurde im Verhältnis von 70/30 bei einer Feststoffkonzentration von 4% im Laborpulper stippenfrei aufgeschlagen, bis ein Mahlgrad von 60 -65 erreicht wurde. Der pH-Wert des Stoffs lag dabei im Bereich zwischen 7 und 8. Der gemahlene Stoff wurde anschließend mit Trinkwasser auf eine Feststoffkonzentration von 0,35% verdünnt.

Um das Verhalten der oben beschriebenen wässrigen Füllstoff-Slurries bei der Herstellung von füllstoffhaltigem Papier zu ermitteln, legte man jeweils 500ml der Papierstoffsuspension vor und dosierte jeweils in diese Pulpe die gemäß den Beispielen und den Vergleichsbeispielen behandelten Slurries sowie ein kationisches Retentionsmittel (Polymin KE 2020). Die Dosiermenge des Retentionsmittels betrug jeweils 0,01% Polymer, bezogen auf Trockengehalt der Papierstoffsuspension. Die Menge an Slurry wurde mit Hilfe mehrerer Vorversuche so eingestellt, dass der Aschegehalt der mit dem Stoff gefertigten Papierblätter 32% betrug. Außerdem wurden Blätter unter Verwendung der in Tabelle 1 angegebenen 20%-tigen wässrigen Anschlämmungen von pärzipitiertem Calciumcarbonat (PCC-Slurry) sowie gemahlenem Calciumcarbonat (GCC-Slurry) hergestellt.

Die Papierblätter wurden jeweils auf einem Rapid-Köthen-Blattbildner nach ISO 5269/2 mit einem Blattgewicht von 80g/m2 gefertigt und anschließend 7 Minuten bei 90°C getrocknet und danach mit einem Liniendruck von 200 N/cm kalandriert.

### Papiere Typ "B"

### Beispiele 21 bis 27

Eine Mischung aus gebleichtem Birkensulfat und gebleichtem Kiefernsulfit wurde im Verhältnis von 70/30 bei einer Feststoffkonzentration von 4% im Laborpulper stippenfrei aufgeschlagen, bis ein Mahlgrad von 55 -60 erreicht wurde. Dem aufgeschlagnen Stoff wurde anschließend ein optischer Aufhellers (Blankophor PSG der Firma Ciba) sowie eine kationische Stärke (HiCat 5163 A der Firma Roquette) zugegeben. Der Aufschuss der kationischen Stärke erfolgt als 10%-tige Stärkeslurry in einem Jet-Kocher bei 130°C und 1 Minute Verweilzeit. Die Dosiermenge des optischen Aufhellers betrug 0,5% Handelsware bezogen auf Trockengehalt der Papierstoffsuspension. Die Dosiermenge der kationischen Stärke betrug 0,5% Stärke bezogen auf den Trockengehalt der Papierstoffsuspension. Der pH-Wert des Stoffs lag dabei im Bereich zwischen 7 und 8. Der gemahlene Stoff wurde anschließend mit Trinkwasser auf eine Feststoffkonzentration von 0,35% verdünnt.

Um das Verhalten der oben beschriebenen wässrigen Füllstoff-Slurries bei der Herstellung von füllstoffhaltigem Papier zu ermitteln, legte man jeweils 500ml der Papierstoffsuspension vor und dosierte jeweils in diese Pulpe die gemäß den Beispielen und den Vergleichsbeispielen behandelten Slurries sowie ein kationisches Retentionsmittel (Polymin KE 2020). Die Dosiermenge des Retentionsmittels betrug jeweils 0.01% Polymer, bezogen auf Trockengehalt der Papierstoffsuspension. Die Menge an Slurry wurde mit Hilfe mehrerer Vorversuche so eingestellt, dass der Aschegehalt der mit dem Stoff gefertigten Papierblätter 20% betrug. Außerdem wurden Blätter unter Verwendung der in Tabelle 2 angegebenen 20%-tigen wässrigen Anschlämmungen von pärzipitiertem Calciumcarbonat (PCC-Slurry), gemahlenem und Calciumcarbonat (GCC-Slurry) hergestellt.

Die Papierblätter wurden jeweils auf einem Rapid-Köthen-Blattbildner nach ISO 5269/2 mit einem Blattgewicht von 80g/m2 gefertigt und anschließend 7 Minuten bei 90°C getrocknet.

### Prüfung der Papierblätter vom Typ "A"

Nach einer Lagerzeit im Klimaraum bei konstant 23°C und 50% Luftfeuchtigkeit für 12 Stunden wurden die Trockenreißlänge der Blätter nach DIN 54540 und die Porosität der Blätter nach Bendtsen (ISO 5636-3) geprüft. Die Trockenrupffestigkeit wurde mit dem IGT- Bedruckbarkeitsprüfer (ISO 3783) ermittelt. Die Ergebnisse sind in Tabelle 1 angegeben.

### Prüfung der Papierblätter vom Typ "B"

Nach einer Lagerzeit im Klimaraum bei konstant 23°C und 50% Luftfeuchtigkeit für 12 Stunden wurden die Trockenreißlänge der Blätter nach DIN 54540, die innere Festigkeit (Scott Bond) nach DIN 54516 und die CIE-Weiße nach DIN 5033 ermittelt. Die Ergebnisse sind in Tabelle 2 angegeben.

**Tabelle 1**

| Bsp. | Slurry aus Bsp. | Trockenreißlänge (m) | Porosität (ml/min) | IGT |
|---|---|---|---|---|
| 14 | Beispiel 7 | 2418 | 1666 | Sehr gut |
| 15 | Beispiel 8 | 2276 | 1754 | Sehr gut |
| 16 | Beispiel 9 | 2313 | 1709 | Sehr gut |
| 17 | Beispiel 10 | 2086 | 1698 | Gut |
| 18 | Beispiel 11 | 2247 | 1639 | Sehr gut |
| 19 | Beispiel 12 | 2097 | 1756 | Sehr gut |
| 20 | Beispiel 13 | 2339 | 1526 | Sehr gut |
| Vergleichsbeispiele | | | | |
| PCC-Slurry ohne Vorbehandlung | | 1667 | 1774 | Schlecht |
| GCC-Slurry ohne Vorbehandlung | | 1739 | 1736 | Schlecht |
| Vergleichsbeispiel 1 | | 1978 | 1699 | Mittel |

**Tabelle 2**

| Bsp. | Slurry aus Bsp. | Trockenreißlänge (m) | CIE-Weisse | Scott-bond (m/kg) |
|---|---|---|---|---|
| 21 | Beispiel 7 | 4245 | 113,8 | 24,3 |
| 22 | Beispiel 8 | 4187 | 113,1 | 22,9 |
| 23 | Beispiel 9 | 4034 | 113,7 | 22,2 |
| 24 | Beispiel 10 | 3934 | 112,6 | 20,4 |
| 25 | Beispiel 11 | 4197 | 112,3 | 23,7 |
| 26 | Beispiel 12 | 3912 | 112,1 | 21,4 |
| 27 | Beispiel 13 | 4183 | 119,6 | 22,1 |
| | | | | |
| Vergleichsbeispiele | | | | |
| PCC-Slurry ohne Vorbehandlung | | 3354 | 110,7 | 15,6 |
| GCC-Slurry ohne Vorbehandlung | | 3268 | 119,4 | 15,2 |
| Vergleichsbeispiel 1 | | 3754 | 111,8 | 17,2 |

## Patentansprüche

1. Wässrige Zusammensetzung, umfassend wenigstens einen feinteiligen Füllstoff und wenigstens ein wasserlösliches amphoteres Copolymerisat, das erhältlich ist durch Copolymerisieren eines Monomergemischs, enthaltend
a) wenigstens ein N-Vinylcarbonsäureamid der allgemeinen Formel I 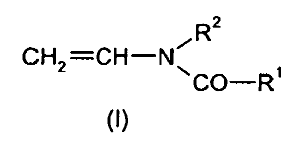 worin R¹ und R² unabhängig voneinander für H oder C₁- bis C₆-Alkyl stehen,
b) wenigstens ein Monomer, das ausgewählt ist unter monoethylenisch ungesättigten Sulfonsäuren, Phosphonsäuren, Phosphorsäureestern und Derivaten davon,
c) gegebenenfalls wenigstens ein Monomer, das ausgewählt ist unter monoethylenisch ungesättigten Mono- und Dicarbonsäuren, deren Salzen und Dicarbonsäureanhydriden,
d) gegebenenfalls wenigstens ein von den Komponenten a) bis c) verschiedenes monoethylenisch ungesättigtes Monomer, das frei von Nitrilgruppen ist, und
e) gegebenenfalls wenigstens eine Verbindung, die mindestens zwei ethylenisch ungesättigte Doppelbindungen im Molekül aufweist,
mit der Maßgabe, dass das Monomergemisch wenigstens ein Monomer b) oder c) mit mindestens einer freien Säuregruppe und/oder einer Säuregruppe in Salzform enthält,
und anschließende teilweise oder vollständige Hydrolyse der Gruppen -CO-R¹ aus den in das Copolymerisat einpolymerisierten Monomeren I.

2. Zusammensetzung nach Anspruch 1, wobei als Komponente a) N-Vinylformamid eingesetzt wird.

3. Zusammensetzung nach einem der vorhergehenden Ansprüche, wobei die Komponente b) ausgewählt ist unter Vinylsulfonsäure, Allylsulfonsäure, Methallylsulfonsäure, Sulfoethylacrylat, Sulfoethylmethacrylat, Sulfopropylacrylat, Sulfopropylmethacrylat, 2-Hydroxy-3-acryloxypropylsulfonsäure, 2-Hydroxy-3-methacryloxypropylsulfonsäure, Styrolsulfonsäure, Acrylamidomethylenphosphonsäure, 2-Acrylamido-2-methylpropansulfonsäure, Vinylphosphonsäure, CH₂=CH-NH-CH₂-PO₃H, Vinylphosphonsäuremonomethylester, Vinylphosphonsäuredimethylester, Allylphosphonsäure, Allylphosphonsäuremonomethylester, Allylphosphonsäuredimethylester, Acryamidomethylpropylphosphonsäure, (Meth)acrylethylenglycolphosphat, Phosphorsäuremonovinylester, Phosphorsäuremonoallylester, den Salzen der zuvorgenannten Säuren und Mischungen davon.

4. Zusammensetzung nach einem der vorhergehenden Ansprüche, wobei das zur Polymerisation eingesetzte Monomergemisch wenigstens eine Verbindung der Komponente b) und wenigstens eine Verbindung der Komponente c), jeweils mit einer freien Säuregruppe oder einer Säuregruppe in Salzform enthält.

5. Zusammensetzung nach einem der vorhergehenden Ansprüche, wobei die hydrolysierten Copolymerisate
- 1 bis 98 Mol-%, vorzugsweise 1 bis 75 Mol-%, Vinylcarbonsäureamideinheiten,
- 1 bis 98 Mol-%, vorzugsweise 1 bis 55 Mol-%, Einheiten von monoethylenisch ungesättigten Sulfonsäuren, Phosphonsäuren, Phosphorsäureestern und Derivaten davon,
- 0 bis 80 Mol-%, vorzugsweise 0,1 bis 45 Mol-%, Einheiten von monoethylenisch ungesättigten Mono- und Dicarbonsäuren, deren Salzen und Dicarbonsäureanhydriden,
- 1 bis 98 Mol-%, vorzugsweise 1 bis 55 Mol-%, Vinylamin- und/oder Amidineinheiten,
- bis zu 30 Mol-% Einheiten von anderen monoethylenisch ungesättigten Verbindungen, die frei von Nitrilgruppen sind,
enthalten.

6. Zusammensetzung nach einem der vorhergehenden Ansprüche, wobei die hydrolysierten Copolymerisate
- 5 bis 70 Mot-% Vinylcarbonsäureamideinheiten,
- 3 bis 30 Mol-% Einheiten von monoethylenisch ungesättigten Sulfonsäuren, Phosphonsäuren und Salzen davon,
- 0 bis 45 Mol-% Einheiten von Acrylsäure, Methacrylsäure, Salzen und Gemischen davon
- 10 bis 50 Mol-% Vinylamineinheiten in Salzform und/oder Amidineinheiten enthalten.

7. Zusammensetzung nach einem der vorhergehenden Ansprüche, die 1 bis 50 Gew. -% vorzugsweise 10 bis 40 Gew.-%, mindestens eines feinteiligen Füllstoffes enthält.

8. Zusammensetzung nach einem der vorhergehenden Ansprüche, die 0,1 bis 5 Gew.-%, vorzugsweise 0,25 bis 3 Gew.-%, amphotere wasserlösliche Copolymerisate, bezogen auf Füllstoffe, enthält.

9. Zusammensetzung nach einem der vorhergehenden Ansprüche, wobei die amphoteren Copolymerisate eine anionische oder kationische Überschußladung tragen oder die gleiche Menge an kationischer and anionischer Ladung aufweisen.

10. Verfahren zur Herstellung einer wässrigen Zusammensetzung, wie in einem der Ansprüche 1 bis 9 definiert, bei dem man zu einer wässrigen Anschlämmung, die mindestens einen feinteiligen Füllstoff und gegebenenfalls wenigstens ein Dispergierhilfsmittel enthält, 0,1 bis 5 Gew.-%, bezogen auf Füllstoff, mindestens eines Copolymeren, wie in einem der Ansprüche 1 bis 6 definiert, zugibt oder die wässrige Anschlämmung mindestens eines feinteiligen Füllstoffs in eine wässrige Lösung des genannten amphoteren Copolymeren einträgt und die Bestandteile jeweils innig miteinander in Kontakt bringt.

11. Verfahren nach Anspruch 10, wobei die elektrophoretische Mobilität der feinteiligen Füllstoffteilchen der wässrigen Anschlämmung bei einem pH von 7 negativ ist oder maximal null beträgt.

12. Verwendung einer wässrigen Zusammensetzung, wie in einem der Ansprüche 1 bis 9 definiert, als Zusatz zum Papierstoff bei der Herstellung von füllstoffhaltigem Papier, füllstofihaltigem Karton oder füllstoffhaltiger Pappe durch Entwässern.

13. Papier, Pappe und Karton, modifiziert durch Zugabe einer wässrigen Zusammensetzung, wie in einem der Ansprüche 1 bis 9 definiert.

## Claims

1. An aqueous composition comprising at least one finely divided filler and at least one water-soluble amphoteric copolymer which is obtainable by copolymerization of a monomer mixture comprising
a) at least one N-vinylcarboxamide of the formula I 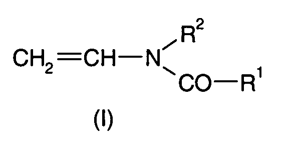 where R¹ and R², independently of one another, are H or C₁- to C₆-alkyl,
b) at least one monomer which is selected from monoethylenically unsaturated sulfonic acids, phosphonic acids, phosphoric esters and derivatives thereof,
c) if appropriate, at least one monomer which is selected from monoethylenically unsaturated mono- and dicarboxylic acids, the salts thereof and dicarboxylic anhydrides,
d) if appropriate, at least one monoethylenically unsaturated monomer which differs from the components a) to c) and is free of nitrile groups, and
e) if appropriate, at least one compound which has at least two ethylenically unsaturated double bonds in the molecule,
with the proviso that the monomer mixture comprises at least one monomer b) or c) having at least one free acid group and/or an acid group in salt form,
and subsequent partial or complete hydrolysis of the -CO-R¹ groups from the monomers I incorporated in the form of polymerized units in the copolymer.

2. The composition according to claim 1, wherein N-vinylformamide is used as component a).

3. The composition according to any of the preceding claims, wherein component b) is selected from vinylsulfonic acid, allylsulfonic acid, methallylsulfonic acid, sulfoethyl acrylate, sulfoethyl methacrylate, sulfopropyl acrylate, sulfopropyl methacrylate, 2-hydroxy-3-acryloyloxypropylsulfonic acid, 2-hydroxy-3-methacryloyloxypropylsulfonic acid, styrenesulfonic acid, acrylamidomethylenephosphonic acid, 2-acrylamido-2-methylpropanesulfonic acid, vinylphosphonic acid, CH₂=CH-NH-CH₂-PO₃H, monomethyl vinylphosphonate, dimethyl vinylphosphonate, allylphosphonic acid, monomethyl allylphosphonate, dimethyl allylphosphonate, acrylamidomethylpropylphosphonic acid, (meth)acryloylethylene glycol phosphate, monovinyl phosphate, monoallyl phosphate, the salts of the abovementioned acids and mixtures thereof.

4. The composition according to any of the preceding claims, wherein the monomer mixture used for the polymerization comprises at least one compound of component b) and at least one compound of component c), in each case having a free acid group or an acid group in salt form.

5. The composition according to any of the preceding claims, wherein the hydrolyzed copolymers comprise
- from 1 to 98, preferably from 1 to 75, mol% of vinylcarboxamide units,
- from 1 to 98, preferably from 1 to 55, mol% of units of monoethylenically unsaturated sulfonic acids, phosphonic acids, phosphoric esters and derivatives thereof,
- from 0 to 80, preferably from 0.1 to 45, mol% of units of monoethylenically unsaturated mono- and dicarboxylic acids, the salts thereof and dicarboxylic anhydrides,
- from 1 to 98, preferably from 1 to 55, mol% of vinylamine and/or amidine units,
- up to 30 mol% of units of other monoethylenically unsaturated compounds which are free of nitrile groups.

6. The composition according to any of the preceding claims, wherein the hydrolyzed copolymers comprise
- from 5 to 70 mol% of vinylcarboxamide units,
- from 3 to 30 mol% of units of monoethylenically unsaturated sulfonic acids, phosphonic acids and salts thereof,
- from 0 to 45 mol% of units of acrylic acid, methacrylic acid, salts and mixtures thereof,
- from 10 to 50 mol% of vinylamine units in salt form and/or amidine units.

7. The composition according to any of the preceding claims, which comprises from 1 to 50, preferably from 10 to 40, % by weight of at least one finely divided filler.

8. The composition according to any of the preceding claims, which comprises from 0.1 to 5, preferably from 0.25 to 3, % by weight, based on fillers, of amphoteric water-soluble copolymers.

9. The composition according to any of the preceding claims, wherein the amphoteric copolymers have an excess anionic or cationic charge or the same quantity of cationic and anionic charge.

10. A process for the preparation of an aqueous composition as defined in any of claims 1 to 9, in which from 0.1 to 5% by weight, based on filler, of at least one copolymer as defined in any of claims 1 to 6 are added to an aqueous slurry which contains at least one finely divided filler and, if appropriate, at least one dispersant, or the aqueous slurry of at least one finely divided filler is introduced into an aqueous solution of said amphoteric copolymer and the constituents are brought in each case into intimate contact with one another.

11. The process according to claim 10, wherein the electrophoretic mobility of the finely divided filler particles of the aqueous slurry is negative or not more than zero at a pH of 7.

12. The use of an aqueous composition as defined in any of claims 1 to 9 as an additive for the paper stock in the production of filler-containing paper, filler-containing cardboard or filler-containing board by draining.

13. A paper, board or cardboard modified by adding an aqueous composition as defined in any of claims 1 to 9.

## Revendications

1. Composition aqueuse comprenant au moins une charge finement divisée et au moins un copolymère amphotère hydrosoluble que l'on peut obtenir par copolymérisation d'un mélange de monomères, qui contient :
a) au moins un amide d'acide N-vinylcarboxylique de formule générale I : 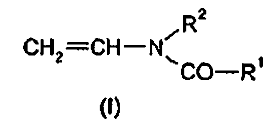 dans laquelle R¹ et R² représentent, indépendamment l'un de l'autre, de l'hydrogène ou un alkyle en C₁-C₆,
b) au moins un monomère que l'on choisit parmi des acides sulfoniques, des acides phosphoniques, des esters d'acide phosphorique à insaturation monoéthylénique et leurs dérivés,
c) éventuellement au moins un monomère que l'on choisit parmi les acides mono- et dicarboxyliques à insaturation monoéthylénique, leurs sels et les anhydrides d'acides dicarboxyliques,
d) éventuellement au moins un monomère à insaturation monoéthylénique différent des composants a) à c), qui est exempt de groupements nitrile, et
e) éventuellement au moins un composé qui présente au moins deux doubles liaisons à insaturation éthylénique dans la molécule,
à condition que le mélange de monomères contienne au moins un monomère b) ou c) ayant au moins un groupement acide libre et/ou un groupement acide sous forme de sel,
puis par hydrolyse partielle ou complète des groupements -CO-R¹ des monomères I à l'état polymérisé dans le copolymère.

2. Composition selon la revendication 1, dans laquelle on utilise du N-vinylformamide comme composant a).

3. Composition selon l'une quelconque des revendications précédentes, dans laquelle le composant b) est choisi parmi l'acide vinylsulfonique, l'acide allylsulfonique, l'acide méthallylsulfonique, l'acrylate de sulfoéthyle, le méthacrylate de sulfoéthyle, l'acrylate de sulfopropyle, le méthacrylate de sulfopropyle, l'acide 2-hydroxy-3-acryloxypropylsulfonique, l'acide 2-hydroxy-3-méthacryloxypropylsulfonique, l'acide styrènesulfonique, l'acide acrylamidométhylènephosphonique, l'acide 2-acrylamido-2-méthylpropanesulfonique, l'acide vinylphosphonique, CH₂=CH-NH-CH₂-PO₃H, le monométhylester d'acide vinylphosphonique, le diméthylester d'acide vinylphosphonique, l'acide allylphosphonique, le monométhylester d'acide allylphosphonique, le diméthylester d'acide allylphosphonique, l'acide acrylamidométhylpropylphosphonique, le (méth)acryléthylèneglycolphosphate, le monovinylester d'acide phosphorique, le monoallylester d'acide phosphorique, les sels des acides précités et leurs mélanges.

4. Composition selon l'une quelconque des revendications précédentes, dans laquelle le mélange de monomères utilisé pour la polymérisation contient au moins un composé du composant b) et au moins un composé du composant c), respectivement, avec un groupement acide libre ou un groupement acide sous forme de sel.

5. Composition selon l'une quelconque des revendications précédentes, dans laquelle les copolymères hydrolysés contiennent :
- 1 à 98% en mole, de préférence, 1 à 75% en mole d'unités d'amide d'acide vinylcarboxylique,
- 1 à 98% en mole, de préférence, 1 à 55% en mole d'unités d'acides sulfoniques, d'acides phosphoniques, d'esters d'acides phosphoniques à insaturation monoéthylénique et de leurs dérivés,
- 0 à 80% en mole, de préférence, 0,1 à 45% en mole d'unités d'acides mono- et dicarboxyliques à insaturation monoéthylénique, de leurs sels et d'anhydrides d'acides dicarboxyliques,
- 1 à 98% en mole, de préférence, 1 à 55% en mole d'unités de vinylamine et/ou d'amidine, et
- jusqu'à 30% en mole d'unités d'autres composés à insaturation monoéthylénique, qui sont exempts de groupements nitrile.

6. Composition selon l'une quelconque des revendications précédentes, dans laquelle les copolymères hydrolysés contiennent :
- 5 à 70% en mole d'unités d'amide d'acide vinylcarboxylique,
- 3 à 30% en mole d'unités d'acides sulfoniques, d'acides phosphoniques à insaturation monoéthylénique et de leurs sels,
- 0 à 45% en mole d'unités d'acide acrylique, d'acide méthacrylique, de leurs sels et de leurs mélanges,
- 10 à 50% en mole d'unités de vinylamine sous forme de sel et/ou d'unités d'amidine.

7. Composition selon l'une quelconque des revendications précédentes, qui contient 1 à 50% en poids, de préférence, 10 à 40% en poids d'au moins une charge finement divisée.

8. Composition selon l'une quelconque des revendications précédentes, qui contient 0,1 à 5% en poids, de préférence, 0,25 à 3% en poids de copolymères amphotères hydrosolubles, par rapport aux charges.

9. Composition selon l'une quelconque des revendications précédentes, dans laquelle les copolymères amphotères portent une charge anionique ou cationique excédentaire ou présentent la même quantité de charge cationique et anionique.

10. Procédé de fabrication d'une composition aqueuse, telle que définie dans l'une quelconque des revendications 1 à 9, dans lequel on ajoute à une solution de décantation aqueuse qui contient au moins une charge finement divisée et, éventuellement, au moins un agent dispersant, 0,1 à 5%, par rapport à la charge, d'au moins un copolymère tel que défini dans l'une quelconque des revendications 1 à 6, ou l'on introduit la solution de décantation aqueuse d'au moins une charge finement divisée dans une solution aqueuse du copolymère amphotère cité et on met les composants, respectivement, en contact intime les uns avec les autres.

11. Procédé selon la revendication 12, dans lequel la mobilité électrophorétique des particules de charge finement divisées de la solution de décantation aqueuse est négative à pH de 7 ou est nulle au maximum.

12. Utilisation d'une composition aqueuse telle que définie dans l'une quelconque des revendications 1 à 9, comme additif de la pâte à papier dans le cas de la fabrication de papier contenant une charge, de carton épais contenant une charge ou de carton contenant une charge, par déshydratation.

13. Papier, carton et carton épais modifiés par addition d'une composition aqueuse, telle que définie dans l'une quelconque des revendications 1 à 9.
